# EUROPÄISCHE PATENTSCHRIFT

(11) **EP 1 362 694 B1**
(45) Veröffentlichungstag und Bekanntmachung des Hinweises auf die Patenterteilung: **18.08.2004**
(21) Anmeldenummer: 02076924.6
(22) Anmeldetag: 14.05.2002
(51) Int. Cl.: B32B 27/06, E04B 1/66, E04D 12/00, C08J 5/18

(54) **Feuchteschutz mit Winddichtung für Gebäude**
Windproof moisture barrier for buildings
Barrière d'humidité imperméable au vent pour bâtiments

(43) Veröffentlichungstag der Anmeldung: 19.11.2003
(73) Patentinhaber: Nötzli, Rolf, 6052 Hergiswil (CH)
(72) Erfinder:
(74) Vertreter: Arato, Laszlo

(56) Entgegenhaltungen:
- EP-A- 0 125 645
- EP-A- 0 533 493
- DE-A- 2 156 792
- DE-A- 19 819 085
- DE-A- 19 857 483
- DE-U- 1 886 678
- PATENT ABSTRACTS OF JAPAN vol. 1998, no. 14, 31. Dezember 1998 (1998-12-31) & JP 10 230570 A (MITSUBOSHI BELTING LTD;SANPO JUSHI KOGYO KK), 2. September 1998 (1998-09-02)

## Beschreibung

Die Erfindung betrifft den Feuchtenschutz und die Winddichtung von Bauten mit Hilfe einer Kunststoff-Folie, die insbesondere zum nachhaltigen Schutz der Holzkonstruktion der Dächer und des Elementenbaus aus porösen Baustoffen, zur Steigerung der Wärmedämmung und somit der Verbesserung des thermischen Energiehaushalts von Gebäuden dient.

Gebäude werden zum Schutz des Innenraumes von Wind und Wetter errichtet. Als Nutzraum eines Gebäudes galt lange Zeit die von den Wänden und der Decke begrenzte Kubatur. Der Dachboden, womit der Zwischenraum von der Decke und des Daches gemeint ist, galt für den Bauherrn als notwendiges Übel des Wetterschutzes, denn wegen feuerpolizeilichen Bedenken war ausser des Wäschetrocknens, die verweilende Belegung untersagt. Seit etwa dem Ölschock der siebziger Jahre vollzog sich im Bauwesen dank der technischen Machbarkeit eine Harmonisierung der ökonomischen und ökologischen Interessen des Individuums mit der Gemeinschaft. Zeugnis der Umwälzung sind dem Wind und Wetter trotzende geschlossene Neubauten und ein wachsender Teil der entsprechend diesen Merkmalen sanierten alten Bausubstanz, in dem die Nutzung des umbauten Raumes uneingeschränkt gestattet ist.

Aus der Schrift DE 195 14 420 ist eine "Feuchte adaptive Dampfbremse" bekannt, die als Folie vorzugsweise aus Polyamid 6, 4 oder 3 besteht und nebst von der Umgebungsfeuchte abhängigem Wasserdampf-Diffusionswiederstand auch ausreichende Zug und Zerreissfestigkeit aufweist. Weil die Folie ihre physikalischen Eigenschaften je nach Feuchtigkeits-Belastung so ändert, dass sie als Dampfbremse gegen das Eindringen von Feuchtigkeit wirkt und anderseits, dank ihrer Anpassungsfähigkeit in feuchtem Klima, die Bauteile austrocknen lässt, wird sie auch "Klimamembrane" genannt.
Die Folie verändert nämlich ihre Molekularstruktur so, dass die durch sie geschützten Bauteile durch die Heizperiode des Winters wie in der Feuchte des Sommers den optimalen trockenen Zustand erreichen und behalten können. Damit verhindert die Folie das Eindringen von Feuchtigkeit im Winter, mit der Erhöhung ihres Diffusionswiderstandes und im Sommer wird sie dampfdurchlässig als Folge der erhöhten Feuchtigkeit, so dass die durch die Folie bedeckte baufeuchten Teile eines Neubaus Idealerweise austrocknen können.

Der Nachteil des Standes der Technik ist, dass der Einsatz der bekannten Folie insbesondere bei den Sparrenvolldämmung bei Dächern von den Handwerkern kritisiert und wo möglich boykottiert wird. Die Gründe dafür sind
1. lautstarke Geräusche beim Verlegen,
2. geringe Reissfestigkeit, so dass beim Verlegen Risse entstehen, die durch Kleben zu reparieren sind,
3. mangelnde Schmiegsamkeit, die sich bei Rohrdurchstoss und örtlicher Komplexität der Trajektorie sich mit Rümpfen und Werfungen äussert,
4. nur 2 m Bahn- und Rollenbreite, (vgl. http://www.isover.ch/de/prod-vario.html), was beim speditiven Bezug grösserer Flächen hinderlich schmal ist,
   und schliesslich aber nicht zuletzt,
5. die Folie darf gemäss Anweisung des Herstellers nicht gespannt, nichteinmall planparallel, sondern ausschliesslich mit Durchhang z.B. bei einem mittleren Sparrenfeld von ca. 60 cm Lichtmass mit ca. 3 cm Durchhang (vgl. http://www.isover.ch/de/prod-vario.html) verlegt werden, da sie ansonsten reisst.

Für den Elementbau ist die Konsequenz des im Punkt 5 genannten Nachteils dramatisch, denn sie Verzicht auf den Einsatz der Dampfbremsfolie des Standes der Technik auf vorgefertigten Paneelen wegen des Durchhangs. Denn das Risiko einer Verletzung von durchhängenden Folien sind für die Handhabung und der Logistik von Paneelen zu extrem...

Hier will die Erfindung abhelfen. Die Erfindung, wie sie in den Ansprüchen gekennzeichnet ist, löst die Aufgabe, ohne den obigen Nachteile (1-5), indem ein mit carboxylhaltigen Monomeren compundierter Polymer des Ethylens vorgeschlagen und verwendet wird.

Die Folie mit dem geschützten Handelsnahme AIRPASS des Anmelders besteht aus einer Mischung von Polyethylen und Acrylsäureester.

Der springende Punkt ist, dass die AIRPASS Folie gegenüber dem PA6 Folien des Standes der Technik eine höhere Zugfestigkeit aufweist, womit die maximale Spannung gemeint ist, die eine Folie vor dem endgültig zerreissen ertragen kann und eine deutlich höhere Reissdehnung hat, d.h. der Wert um den die Folie bis zum Zerreissen verstreckt wird, so dass sich die AIRPASS Folie bis zum Zerreissen wesentlich mehr dehnen lässt als die PA6 Folie der Standes der Technik. Aufgrund der höheren Dehnfähigkeit und der vorzüglichen Spannungsrissbeständigkeit der Mischung aus Polyethylen und Acrylsäureester lässt sich die AIRPASS Folie blasextrudieren und dabei ausgezeichnet warm strecken. Gegenüber der PA6 Folien sind diese Eigenschaften signifikant, denn sie bedeuten eine rationellere Produktion, grosszügigere Produktgestaltung (d.h. wesentlich grössere Bahnbreiten) und nicht zuletzt eine sprichwörtlich höhere Flexibilität für den Verbraucher bei der Verarbeitung. Denn die Folien des Standes der Technik (PA6) lassen sich nur mit Breitschlitzdüsen und darum nur "statisch" und nur in beschränkter Breite (2 m) produzieren, was gegenüber der Bahnbreite des "dynamischen" Blasverfahrens von bis zu 4 m eher bescheiden ist. Die vorgeschlagene AIRPASS Folie lässt sich mit höherer Produktivität erzeugen und weil sie wegen des elastisch schmiegsamen Verhaltens nicht rauscht und reisst, lässt sie sich auch besser verlegen. Das Verlegen begünstigt zusätzlich die breitere Bahnbreite, weil sie den Montageaufwand wesentlich reduziert. Schliesslich und letztlich sind die hervorragenden Eigenschaften der Permeabilität und die niedrige Transmissionsrate der Gasdurchlässigkeit der AIRPASS Folie zu nennen. Dabei gibt die Permeabilität für Wasserdampf an, wie viele Gramm Wasser eine Folie auf ihre Fläche bezogen pro Tag durchlässt und die Transmissionsrate gibt die Gasdurchlässigkeit an, d.h. welches Gasvolumen die Folie bestimmter Dicke, Fläche sowie Umgebungsdruck pro Tag bei null Prozent relativer Luftfeuchte und Temperaturen durchlässt. Die AIRPASS Folie lässt sich in Dicken von 20 bis 200 µm herstellen und je nach Mischungsverhältnis der Komponenten Polyethylen und Acrylsäureester ihr Wasserdampf-Diffusionswiederstand (s_{d}-Wert) von 0,5 bis 100m diffusionsäquivalente Luftschichtdicke variieren. Die AIRPASS Folie lässt sich auf verschiedensten Trägermaterialien wie Fliesen, verstärkte und unverstärkte Papieren, Geweben aus Metallen sowie Hausund Industritextilfasern applizieren und mit Haftvermittlern und Klebstoffen vollflächig oder partiell beschichten. Mit der AIRPASS Folie lassen sich vorgefertigte Paneelen aus porösen Baustoffen ohne Durchhang beschichten oder beziehen.
Die AIRPASS Folie erfüllt der Ventilfunktion für Bauten auf Idealerweise in dem sie das Eindringen der Feuchtigkeit von Aussen bremst aber das Entweichen der Feuchte von Innen zulässt.

Nachfolgend wird die Anwendung der Erfindung anhand von Ausführungsvarianten beispielsweise wie folgt gezeigt:
- Fig.1: den Einsatz vom AIRPASS bei einem Giebeldach mit Zwischensparrenvolldämmung,
- Fig.2: den Schnitt A-A durch das Dach der Fig.1

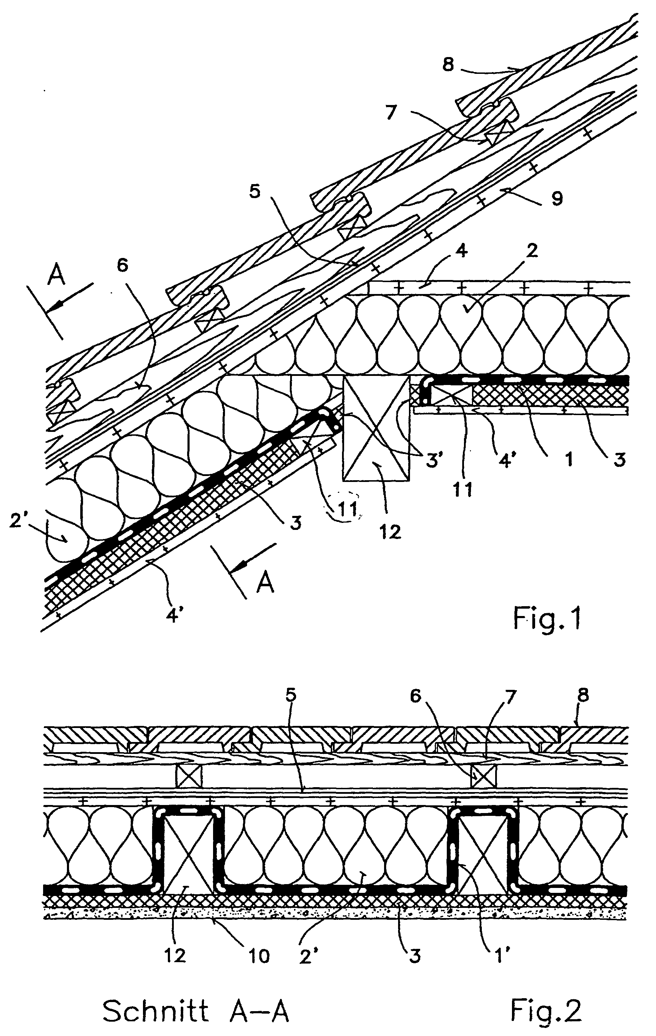

Die Figur 1 und 2 zeigen die typische Konstruktion eines Giebeldaches in traditioneller Holzbauweise, mit Kehlgebälkboden und den tragenden Elementen der Balken 12, Sparren 6 (die auch Konterlatten genannt werden), Dachlatten 5 und den auf die Dachlatten 5 aufliegenden Dachziegeln 8 mit Pfalzpfannen.

Entsprechend der Schnitt A-A (Fig.2) und des Standes der Technik liegt jedoch zwischen den Balken 12 und den Sparren 6, eine von der Verschalung 4 gestützte, flächendeckende Schicht 5 aus wasserabweisendes diffusionsoffenes Material und die Feuchte adaptive Dampfbremsfolie AIRPASS 1', die zugleich die Flächen der Dachbalken 12 mit Ausnahme ihrer nach Innengewandten Flächen umhüllt und so für die Aufnahme der Dämmplatten 2' mit Hilfe der Montageleisten 11 (der Fig. 1) geschlossene quaderförmige Räume bildet. Der grosse Vorteil der AIRPASS-Folie 1,1', dass sie ohne Durchhang, d.h, "straff verlegt" werden darf, wird bereits aus der Figur 1 ersichtlich, wo ihre Befestigung und Fassung mit Isolationsstreifen 3' an den Balken 12 und den Montagelatten 11 geschieht. Denn im Gegensatz zur Stand der Technik darf die AIRPASS-Folie 1,1' straff, d.h. ohne jeden Durchhang mit den Montagelatten 11 verlegt werden, so dass sie, die durch die Verschalung 4' oder durch den Verputzschicht gehaltene Isolationsmatten 3 sich satt anschmiegen kann.
Entsprechend der gezeigten Anordnung sind für die AIRPASS-Folie keine Zwischenräume für ein Durchhang vorhanden, was die Montagearbeit vereinfacht.
Entsprechend den Paneelen des Elementenbaus könnten die AIRPASS-Folie mit den Schichten vom Dämmstoff 2 und Isolationsmatte 3 und den Isolationsmatten 3 sandwichartig strukturiert und je nach Bedarf mit weiteren Ausrüstungen, beispilsweise Metallnetzen gegen Elektrosmog kaschiert werden.

## Patentansprüche

1. Feuchteadaptive Dampfbremsfolie für Volldämmung von Bauten, die ihren Diffusionswiderstand so den Umgebungsbedingungen anpasst, dass sie im Winter ihre Poren sperrt und im Sommer ihre Poren öffnet, **dadurch gekennzeichnet, dass** sie aus einer Mischung von Polyethylen und Acrylsäureester besteht.

2. Feuchteadaptive Dampfbremsfolie nach Anspruch 1 **dadurch gekennzeichnet, dass** der Dampfdiffusionswiderstand der Folie in Abhängigkeit vom Anteil des Acrylsäureesters auf eine Diffusionsäquivalenz von 0,5 bis 100 m Luftschichtdicke bei einer relativen Luftfeuchtigkeit von 60 bis 80% eingestellt ist.

3. Feuchteadaptive Dampfbremsfolie nach den Ansprüchen 1 und 2, **dadurch gekennzeichnet, dass** die Folie eine Dicke von 20 bis 200 µm aufweist.

4. Feuchteadaptive Dampfbremsfolie nach den Ansprüchen 1 bis 3, **dadurch gekennzeichnet, dass** sie für die Sparrenvolldämmung eines Daches geeignet ist.

5. Feuchteadaptive Dampfbremsfolie nach den Ansprüchen 1 bis 3, **dadurch gekennzeichnet, dass** sie zur Beschichtung von Bauplatten, wie Panelen, die aus offenporigen Baumaterialien bestehen, geeignet ist.

6. Feuchteadaptive Dampfbremsfolie nach den Ansprüchen 1 bis 3, **dadurch gekennzeichnet, dass** sie zur Beschichtung von Isolationsmatten geeignet ist.

7. Feuchteadaptive Dampfbremsfolie nach den Ansprüchen 1 bis 6, **dadurch gekennzeichnet, dass** sie mit einem Trägermaterial aus Papier ein Laminat bildet.

8. Feuchteadaptive Dampfbremsfolie nach den Ansprüchen 1 bis 5, **dadurch gekennzeichnet, dass** sie mit einem Trägermaterial aus Fliesen ein Laminat bildet.

9. Feuchteadaptive Dampfbremsfolie nach den Ansprüchen 1 bis 8, **dadurch gekennzeichnet, dass** sie aus rezykliertem Material hergestellt ist.

10. Feuchteadaptive Dampfbremsfolie nach den Ansprüchen 1 bis 9, **dadurch gekennzeichnet, dass** sie mit dem Extrusionsblasverfahren hergestellt ist.

## Claims

1. A moisture-adaptive vapour-barrier film for full insulation of buildings, which adapts its diffusion resistance to environmental conditions in such a way that it blocks its pores in winter and opens its pores in summer, **characterised in that** it is made from a mix of polyethylene and acrylic-acid ester.

2. A moisture-adaptive vapour-barrier film according to Claim 1, **characterised in that**, depending on the acrylic-acid ester content, the vapour-diffusion resistance of the film is set to a diffusion-equivalent air layer thickness of 0.5 to 100 m with a relative humidity of 60 to 80%.

3. A moisture-adaptive vapour-barrier film according to Claims 1 and 2, **characterised in that** the film has a thickness of 20 to 200 µm.

4. A moisture-adaptive vapour-barrier film according to Claims 1 to 3, **characterised in that** it is suitable for full rafter insulation of a roof.

5. A moisture-adaptive vapour-barrier film according to Claims 1 to 3, **characterised in that** it is suitable for covering building boards, such as panels made from open-pored building materials.

6. A moisture-adaptive vapour-barrier film according to Claims 1 to 3, **characterised in that** it is suitable for covering insulation matting.

7. A moisture-adaptive vapour-barrier film according to Claims 1 to 6, **characterised in that** it forms a laminate with a base material made from paper.

8. A moisture-adaptive vapour-barrier film according to Claims 1 to 5, **characterised in that** it forms a laminate with a base material made from tiles.

9. A moisture-adaptive vapour-barrier film according to Claims 1 to 8, **characterised in that** it is manufactured from recycled material.

10. A moisture-adaptive vapour-barrier film according to Claims 1 to 9, **characterised in that** it is manufactured using the extrusion blowing process.

## Revendications

1. Feuille pare-vapeur autorégulatrice face à l'humidité destinée à une isolation complète des bâtiments, laquelle régule sa résistance à la diffusion en fonction des conditions de l'environnement, de telle sorte qu'elle ferme ses pores en hiver et ouvre ses pores en été, **caractérisée en ce qu'**elle est formée par un mélange de polyéthylène et d'acrylate.

2. Feuille pare-vapeur autorégulatrice selon la revendication 1, **caractérisée en ce que** la résistance à la diffusion de la vapeur de la feuille en fonction de la teneur en acrylate est régulée à une diffusion équivalente à une couche d'air de 0,5 à 100 m d'épaisseur par une humidité de l'air relative de 60 à 80 %.

3. Feuille pare-vapeur autorégulatrice selon les revendications 1 et 2, **caractérisée en ce que** la feuille a une épaisseur de 20 à 200 µm.

4. Feuille pare-vapeur autorégulatrice selon l'une quelconque des revendications 1 à 3, **caractérisée en ce qu'**elle convient à une isolation complète des chevrons d'une toiture.

5. Feuille pare-vapeur autorégulatrice selon l'une quelconque des revendications 1 à 3, **caractérisée en ce qu'**elle est apte à être utilisée pour le revêtement de panneaux de construction, tels que des panneaux réalisés dans des matériaux de construction à pores ouverts.

6. Feuille pare-vapeur autorégulatrice selon l'une quelconque des revendications 1 à 3, **caractérisée en ce qu'**elle est apte à être utilisée pour le revêtement de panneaux d'isolation.

7. Feuille pare-vapeur autorégulatrice selon l'une quelconque des revendications 1 à 6, **caractérisée en ce qu'**elle forme un aggloméré stratifié avec un matériau de support en papier.

8. Feuille pare-vapeur autorégulatrice selon l'une quelconque des revendications 1 à 5, **caractérisée en ce qu'**elle forme un aggloméré stratifié avec un matériau de support en dalles.

9. Feuille pare-vapeur autorégulatrice selon l'une quelconque des revendications 1 à 8, **caractérisée en ce qu'**elle est réalisée dans un matériau recyclable.

10. Feuille pare-vapeur autorégulatrice selon l'une quelconque des revendications 1 à 9, **caractérisée en ce qu'**elle est réalisée par un procédé d'extrusion et soufflage.
